# EUROPEAN PATENT APPLICATION

(11) **EP 1 522 938 A1**
(43) Date of publication of application: **13.04.2005**
(21) Application number: 03023113.8
(22) Date of filing: 10.10.2003
(51) Int. Cl.: G06F 17/60

(54) **Distributed handling of associated data sets in a computer network**

(71) Applicant: SAP Aktiengesellschaft, 69190 Walldorf (DE)
(72) Inventor: Jadanovski, Andrei, 74523 Schwäbisch Hall (DE); Kemmer, Johann, 69242 Mühlhausen (DE); Reiner, Robert, 69207 Sandhausen (DE); Sala, Paola, 69181 St. Ilgen (DE); Gurevitch, Elena, 69207 Sandhausen (DE)
(74) Representative: Röthinger, Rainer, Dipl.-Phys.

(57) **Abstract**

A method, a computer program product and a network component for the automatic creation of one or more follow-on data set for an initial data sets are described. A dialogue routine is implemented for initiating one or more dialogue-type communications that include at least one of inputting and confirming data required for creating the follow-on data set. The method comprises providing a data base with a plurality of data sets, generating a list of data sets according to one or more user defined criteria, and displaying the list at least partially. For a data set of the list that allows for the automatic creation of a follow-on data set a related control element is displayed which is configured to be activated by a user operated input device. Upon activation, the control element generates a control signal for initiating the automatic creation of a follow-on data set for the data set selected by activating the control element. Upon generation of the control signal the dialogue routine is skipped for the follow-on data set to be created and the follow-on data set is automatically created based on data derived from at least one of the selected data set and any data set associated with the selected data set. The newly created follow-on data set is then associated with a selected data set for example by writing reference information in a table of the selected data set.

## Description

### Technical Field

The invention relates to the distributed handling of associated data sets in a computer network. More specifically, the invention relates to creating for an initial data set one or more follow-on data sets.

### Background of the Invention

Modern data base related processes, i.e. processes that are based on repeatedly accessing one or more data bases, commonly transit a plurality of processing stages. Transitions from one processing stage to another are often accompanied by the generation of data specific for a particular transition and indicative of the current processing stage. Conventionally, the transition from one processing stage to another is initiated by dialogue-type communications during which data required for creating a particular follow-on data set is input, verified and confirmed.

As examples for such data base related processes the computer-assisted procurement of goods and services or the computer-assisted manufacturing of complex machinery can be mentioned. During a procurement process, data pertaining to different processing stages like purchase requisition, goods ordering, goods receipt and invoicing are successively generated and have to be successively stored. Hence, individual data sets associated with the individual processing stages will have to be handled as the procurement process proceeds.

Due to the very nature of processes of the above type, generation of a data set during a particular processing stage usually requires the evaluation of data sets that have been generated earlier during one or more preceding processing stages. Thus, from the point of view of an initial data set that has been created during an earlier processing stage, in later processing stages follow-on data sets somehow associated with the initial data set are generated.

Since complex data base related processes necessitate the interaction of a plurality of users, software mechanisms handling the generation, storage and manipulation of process related data sets usually run on distributed components of a computer network. This requirement implies that individual data sets will be accessed from different network components at different processing stages.

When a user is accessing or manipulating a particular data set, this data set will usually be locked for other users to ensure a high data integrity. This means that the other users will experience an access delay which depending on the specific situation can last from some seconds to several hours. Such access delays are particularly disruptive in scenarios of the above type where follow-on data sets have to be created from an initial data set. The reason for this is the fact that the access delays may additionally prevent a smooth transition to another processing stage.

Although being annoying, access delays and consecutive transition delays can usually be tolerated in scenarios that involve only a few collaborative users, a few processing stages and a small number of processes running in parallel. In such scenarios mutual communication for example by telephone or via e-mail can resolve potential conflicts and ensure a smooth and rapid transition from one processing stage to another. However, as the number of processes running in parallel and the complexity of the individual processes increase, such conventional conflict resolving mechanisms can no longer be uphold.

Consequently, it is an object of the present invention to enable an efficient handling of associated data sets stored within one or more data bases. More particularly, it is an object of the present invention to provide a method, a computer program product and a network component that enable an automatic and standardized processing of large amounts of associated data sets to ensure an accelerated creation of follow-on data sets. It is a further object of the present invention to provide a network structure that allows for an efficient implementation of the method, the computer program product and the network component.

### Summary of the Invention

According one aspect of the invention a method is provided for handling data sets in a computer network by automatically creating for a data set at least one associated follow-on data set, wherein the data sets are directly or indirectly accessible from a plurality of network components and wherein a dialogue routine is implemented for initiating one or more dialogue-type communications that include at least one of inputting and confirming data required for creating the follow-on data set. The method comprises the steps of providing a data base with a plurality of data sets, generating a list of data sets according to one or more user-defined criteria, and displaying the list at least partially, wherein one or more data sets of the list allow for the automatic creation of a follow-on data set. Upon selection of an individual data set that allows for the automatic creation of a follow-on data set, the dialogue routine is skipped for the follow-on data set to be created, the follow-on data set for the selected data set is automatically created on the basis of data automatically derived from at least one of the selected data set and any data set associated with the selected data set, and the newly created follow-on data set is associated with the selected data set. Selection of a particular data set that allows for the automatic creation of a follow-on data set may be implemented by displaying a first control element related to a displayed data set that allows for the automatic creation of a follow-on data set. The first control element may be configured to be activated by a user-operated input device to generate a first control signal for initiating the automatic creation of a follow-on data set for the data set selected by activating the related first control element. Upon creation of the first control signal, the follow-on data set is automatically created.

The method may be performed in a scenario that is based on a single follow-on data set type or in a scenario that involves a plurality of different follow-on data set types. The latter scenario may include a process that comprises several consecutive processing stages. Each processing stage may be associated with a particular follow-on data set type, so that as the process proceeds two or more follow-on data sets are consecutively created.

As has been mentioned above, the list of data sets is generated according to one or more user-defined criteria. Thus, the method may further include the input of one or more selection criteria that are to be considered when generating the list of data sets. The selection criteria may be related to various aspects of the data sets such as the creation date, a particular data set status, a specific user or user group in charge of handling the data set, etc.

In the case two or more different follow-on data set types are defined, the selection criteria may additionally or alternatively include a particular follow-on data set type. Upon selection of a particular follow-on data set type, the list of data sets may thus be generated from data sets that allow for a creation of follow-on data sets of the selected type. Selection of a particular follow-on data set type may be performed in various ways. According to one exemplary implementation, selection of a follow-on data set type is enabled by displaying a list of two or more follow-on data set types and by relating a second control element to each type, the second control element being configured to be activated by a user-operated input device to generate a second control signal indicative of the selected type. The second control signal may be evaluated prior to generating the list of data sets. Hence, the list of data sets may selectively include only data sets that allow for the creation of a follow-on data set of a particular type.

In a scenario that includes a plurality of different follow-on data set types, for each follow-on data set type an individual type of first control element may be defined. In a further step an individual data set (e.g. of the list of data sets) may be assessed to find out if a follow-on data set can be created for this particular data set and to determine the type of follow-on data set that can be created for this particular data set. Thus, a data set for which a follow-on data set of a specific type can be created may be displayed together with the corresponding type of first control element. In such a case display of the first control element not only informs the user about the fact that a follow-on data set can be created but additionally informs the user of the particular type of follow-on data set that can be created for the displayed data set.

The list of data sets may only include data sets for which a non-specified or a previously selected follow-on data set can automatically be created skipping the implemented dialogue routine. According to a further variant of the invention, the list of data sets may also include data sets for which an associated follow-on data set can only be created using the dialogue routine. For such data sets necessitating dialogue-typed interactions no related first control elements may be displayed or, if displayed, may be configured as non-active.

The individual data sets stored in the data base can have various formats. According to one exemplary data set format, each data set includes a header with individual data set information like a data set denomination or a time stamp (e.g. creation date). Additionally, a data set may include one, two or more individual data items following the data set header. According to one variant of the invention, follow-on data sets may be created for the individual data items of a data set. In such a case two or more follow-on data sets of the same follow-on data set type may be created independently for a single data set. For each independently created follow-on data set one or more further follow-on data sets may be created. Thus, a single individual data set may form the root of a tree that includes leafs and/or knots in the form of associated follow-on data sets. Each knot may in turn have one, two or more sons.

If a data set is comprised of one or more individual data items, the list of data sets may be generated from data sets that include at least one data item that allows for a creation of a follow-on data set. For each individual data item that allows for a creation of a follow-on data set an individual first control element may be provided.

The first control element related to a data set that allows for the automatic creation of a follow-on data set may be displayed in a overview screen on which the list of data sets is presented also. Presentation of the list of data sets can be performed for example by displaying for each data set belonging to the list characteristic information like a data set denomination derived from the data set header.

A third control element may be related to each displayed data set of the list of data sets. The third control element may be configured to be activated'by a user-operated input device to generate a third control signal. Generation of the third control signal may result in additional information about the data set selected by activating a particular third control element being displayed. Additionally, generation of the third control signal may result in a display of the first control element for the selected data set. Thus, the first control element may remain invisible until generation of the third control signal. This means that the third control signal may precede a related first control signal.

Upon generation of the first control signal, at least one of the selected data set and any data set associated therewith may be locked at least partially with respect to changing data comprised therein. Such a mechanism prevents that the particular user having created the first control signal or any third user can interfere with the background process of automatically creating a follow-on data set.

Creation of a follow-on data set for a selected data set may require the processing of particular data. This data may for example be input in the course of the dialogue routine. If the dialogue routine is skipped, the data required for creating a follow-on data set may be automatically derived by assessing at least one of the selected data set for which the follow-on data set will be created and any data set associated with the selected data set. This may include that the selected data set and/or any associated data set are evaluated to determine if the available information suffices for automatically creating a follow-on data set.

The data required for creating a particular follow-on data set may be derived in various ways and at various points in time. The required data may for example be derived by comparing an initially specified numerical value with an accumulated numerical value that has been generated from individual numerical values input, confirmed or derived in context with the creation of at least one of the selected data set and any associated data set. The difference between the initially specified numerical value and the accumulated numerical value may form the basis for creating the follow-on data set.

Once the follow-on data set has been created, it may be associated with the selected data set for which it has been created. To this end a link between the newly created follow-on data set and the selected data set may be established for example by writing information relating to the newly created follow-on data set in a memory location of the selected data set or any data set associated with the selected data set. Alternatively or additionally, information about the selected data set or any data set associated therewith may be written in a memory location the newly created follow-on data set.

Information included in the newly created follow-on data set may be used to control a printing device arranged in the network to generate a document like a goods receipt or an invoice. A further possibility is to send the newly created follow-on data set or information included therein via e-mail or in any other electronic form to a remote network component.

The present invention may be implemented as software, as a piece of hardware, or as a combination thereof. Thus, the invention also relates to a computer program product with program code portions for performing the individual steps of the invention when the computer program is run on one or more network components. The computer program product may include a first program code portion for searching a data base for data sets according to one or more user defined criteria and for generating a data set list thereof, and a second program code portion for displaying the data set list at least partially. For a data set of the list that allows for the automatic creation of a follow-on data set a related control element may be displayed, the control element being configured to be activated by a user-operated input device to generate a control signal for initiating the automatic creation of a follow-on data set for the data set selected by activating a related control element. The computer program product may further comprise a third program code portion responsive to generation of the control signal, for skipping a dialogue routine for the follow-on data set to be created, for automatically creating the follow-on data set on the basis of automatically derived data, and for associating the newly created follow-on data set with the selected data set.

According to a further (hardware) aspect of the invention, a network component is provided that belongs to a computer network including a data base with a plurality of data sets and several network components having access to the data base. The network component comprises a first interface for providing an access to the data base, a processor for generating an instruction for searching the data base for data sets according to one or more user-defined criteria and for generating a list thereof, and a second interface to a presentation unit that displays the generated list at least partially. The list may include at least one data set that allows for the automatic creation of a follow-on data set. A control element related to the data set that allows for the automatic creation of a follow-on data set may be displayed and configured to be activated by a user-operated input device to generate a control signal for initiating the automatic creation of a follow-on data set for the data set selected by activating the related control element. Upon receipt of the control signal via the second interface, the processor skips a dialogue routine implemented for inputting data required to create a follow-on data set, automatically creates the follow-on data set on the basis of previously derived data, and associates the selected data set with the newly created follow-on data set.

The network component may for example be configured as an application server that communicates with further network components according to the hyper text transfer protocol (HTTP). The further network components communicating with the application server may include one or more data base servers on which the data base is installed and one or more presentation servers functioning as presentation units.

### Brief Description of the Drawings

Further details, embodiments, modifications and enhancements of the present invention may be obtained from consideration of the following description of various illustrative embodiments of the invention in conjunction with the drawings, in which:
- Fig. 1: is a schematic diagram illustrating the data processing system used in accordance with the present invention;
- Fig. 2: is a schematic diagram illustrating a hardware-oriented view of a three-tiered client/server configuration of the system depicted in Fig. 1;
- Fig. 3: is a schematic diagram illustrating a software-oriented view of a three-tiered client/server configuration of the system depicted in Fig. 1;
- Fig. 4: is a schematic diagram illustrating an exemplary data base-related process including the consecutive creation of data sets;
- Fig. 5: is a schematic diagram illustrating the consecutive creation of data sets using dialogue-type communications;
- Fig. 6: is a schematic diagram illustrating the appearance of a graphical user interface used in context with a first embodiment of the present invention;
- Fig. 7: is a flowchart illustrating the basic steps of automatically creating a follow-on data set according to the first embodiment of the present invention;
- Fig. 8: is a flowchart illustrating the generation of a list of data sets suitable for the automatic creation of follow-on data sets;
- Fig. 9: is a schematic diagram illustrating the automatic creation of data sets according to the first embodiment of the present invention;
- Fig. 10: is a schematic diagram illustrating the appearance of a graphical user interface used in context with a second embodiment of the present invention; and
- Fig. 11: is a schematic diagram illustrating the automatic creation of data sets according to the second embodiment of the present invention.

### Detailed Description of Preferred Embodiments

Where appropriate, the same reference numbers will be used throughout this detailed description in conjunction with the drawings to refer to the same or like parts.

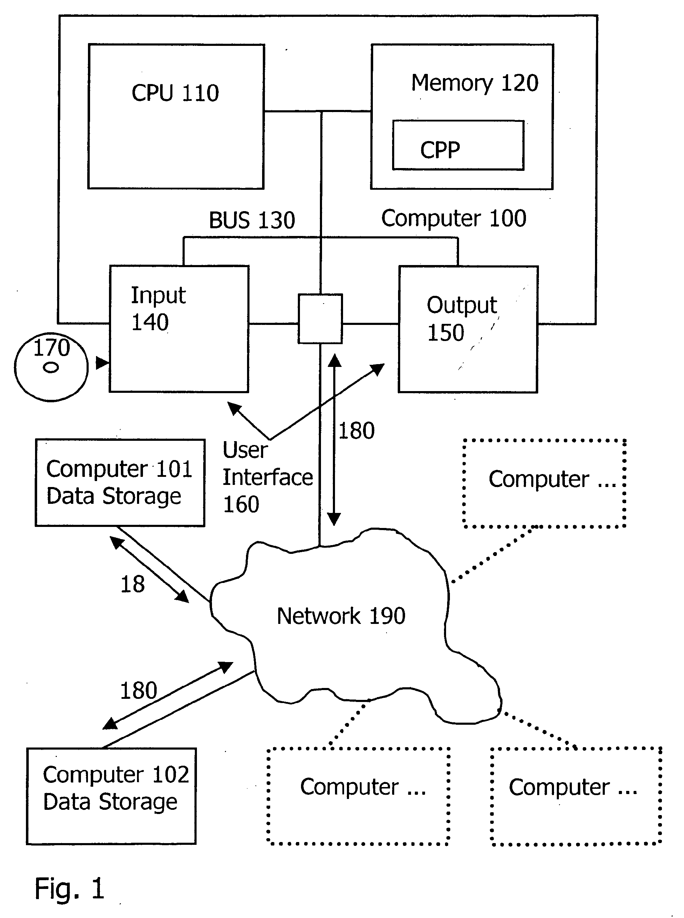

Fig. 1 illustrates a simplified block diagram of a computer network system according to the present invention having a plurality of network components 100, 101, 102, etc. that are coupled via a network 190. The network components 100, 101, 102, etc. may be realized, for example, as clients, servers, routers, peer devices or any other common network devices.

Each network component 100, 101, 102, etc. comprises a processor 110, a memory 120, a bus 130, and, optionally, one or more input devices 140 and output devices 150 (I/O devices) acting as user interface 160, interoperating in a conventionally known manner. The present invention may be embodied in a computer program product (hereinafter CPP) residing on a program carrier 170 and/or in the memory 120, and generating program signals 180, collectively called a "program".

The network components 101, 102, etc., which are also referred to as "remote computers", typically may comprise many or all of the elements described with respect to the network component 100. Hence, the elements 110 to 180 in the network component 100 collectively illustrate also corresponding elements in the other network components 101, 102, etc. of the network 190.

The network component 100 can be, for example, a conventional personal computer (PC), a desktop or a hand-held device, a multiprocessor computer, a microprocessor-based or programmable consumer electronics device, a minicomputer, a mainframe computer, a personal mobile computing device, a mobile telephone, a portable or stationary personal computer, a palmtop computer or the like.

The processor 110 can be, for example, a central processing unit (CPU), a microcontroller unit (MCU), digital signal processor (DSP), or the like. The memory 120 symbolizes elements or components that temporarily or permanently can store data and instructions. Although the memory 120 is conveniently illustrated as a part of the network component 100, a memory function can also be implemented as an independent node in the network 190, in the other components of the network, in the processor 110 itself (e.g., cache, register), or elsewhere.

The memory 120 can be a read only memory (ROM), a random access memory (RAM), or a memory with other access options or capabilities. The memory 120 may be physically implemented as machine-accessible media, such as a magnetic media (like a hard disk, a floppy disk, or other magnetic disk, or a tape), an optical media (like an optical disk, e.g. a CD-ROM or a digital versatile disk - DVD), a semiconductor media (like DRAM, SRAM, EPROM, EEPROM, or a memory stick), or by any other media. Optionally, the memory 120 is distributed across different media. Portions of the memory 120 can be removable or non-removable with respect to a particular network component. For reading from media and for writing into media, the network component 100 uses devices well known in the art such as, for example, disk drives, tape drives, memory card or memory stick reader/writers, etc.

The memory 120 can store software program support modules such as, for example, a basic input output system (BIOS), an operating system (OS), a program library, a compiler, an interpreter, communication programs, drivers, protocol converters, application software programs like text processors, (Internet-) browsers, or data base applications. Although the CPP is illustrated as being stored in memory 120, the CPP can also be located elsewhere. For example, the CPP can also be embodied on the program carrier 170.

The CPP comprises program instructions and - optionally - data or variables that cause processor 110 to execute the steps forming the methodology of the present invention. The method steps are explained in greater detail below. The CPP defines and controls the operation of the network component 100 and its interaction in the network system 190. For example, and without the intention to be limiting, the CPP can be available as source code in any programming language, and as object code ("binary code") in a compiled presentation. Persons of ordinary skill in the art can use the CPP in connection with any of the above mentioned support modules. The functionalities of one or more of the network components 100, 101, 102, etc. and of the CPP are closely related. Phrases, such as "the computer provides" or "the program provides", are used hereinafter to express actions by one or more network nodes that is/are controlled by the CPP in accordance with the invention.

The program carrier 170 is illustrated as being outside the network component 100. For communicating the CPP to the network component 100, the program carrier 170 is conveniently inserted into the input device 140. The carrier 170 is implemented as any computer readable medium, such as one of the media explained above (cf. memory 120). Generally, the program carrier 170 is an article of manufacture comprising a computer readable medium having computer readable program code means embodied therein for executing the method of the present invention. Further, the program signals 180 can also embody the CPP. The signals 180 travel on the computer network 190 to and from the network component 100. The steps of the computer program product CPP can be executed solely in the network component 100, in which case the computer network 190 may be omitted, or can be executed in a distributed manner in one or more of the components of the computer network 190.

The input device 140 is a device that provides data and instructions for being processed by the network component 100. For example, the device 140 can be a keyboard, a pointing device (e.g., a mouse, a trackball, cursor direction keys), a microphone, a joystick, a game pad, a scanner, etc. While these examples are devices requiring human interaction, the device 140 can also operate without human interaction, such as a wireless receiver (e.g. with satellite dish or terrestrial antenna), a sensor, a counter (e.g. goods counter in a factory), etc. The input device 140 can also serve to retrieve the program code of the CPP from the program carrier 170.

The output device 150 is a device that presents instructions and data that have been processed. It can be, for example, a monitor or display (such as a cathode ray tube, a flat panel display, or a liquid crystal display), a speaker, a printer, a plotter, a vibration alert device, etc. Similar to the input device 140, the output device 150 mainly communicates with the user(s), but it can also communicate with further network components or devices. The input device 140 and the output device 150 can be combined into a single device.

The bus 130 and the computer network 190 provide logical and physical connections by conveying instructions and data signals. While connections and communications inside the network component 100 are conveniently handled by the bus 130, connections and communications between different network components are handled by the network 190. Optionally, the network 190 comprises gateways and routers being computers that are dedicatedly programmed to effect data transmission and protocol conversion.

The input/output devices 140 and 150 are coupled to the network component 100 by the bus 130 (as illustrated) or by the network 190 (optional). While the signals inside the network component 100 can be mostly electrical signals, the signals in the network can be electrical, magnetic, optical or wireless (radio) signals.

The network 190 can include one or more of an office-wide computer network, an enterprise-wide computer network, an intranet or the Internet (i.e. world wide web). The world wide web (www) represents all of the computers on the Internet that offer users access to information on the Internet via interactive documents or Web pages.

Web information resides on Web servers on the Internet or within company or community networks (intranets). Network 190 can include a wired or a wireless network, such as, for example, a local area network (LAN), a wide area network (WAN), a wireless LAN (WLAN), a public switched telephone network (PSTN), an integrated services digital network (ISDN), an infra-red (IR) or Bluetooth link, a radio link e.g. according to the Universal Mobile Telecommunications System (UMTS), the Global System for Mobile Communication (GSM), a Code Division Multiple Access (CDMA) system, or satellite link.

Transmission protocols, mechanisms and data formats to effect communications between network components which are connected to and by the network 190 are known, for example, as transmission control protocol/internet protocol (TCP/IP), hyper text transfer protocol (HTTP), secure HTTP, wireless application protocol (wap), unique resource locator (URL), unique resource identifier (URI), hyper text markup language HTML, extensible markup language (XML), extensible hyper text markup language (XHTML), wireless application markup language (WML), electronic data interchange (EDI), which is an electronic exchange of business information between or inside organizations and their information technology (IT) infrastructure in a structured format, remote function call (RFC), or via an application programming interface (API), etc.

Interfaces coupled between individual elements and components are also well known in the art. For simplicity, interfaces are not illustrated. An interface can be, for example, a serial port interface, a parallel port interface, a game port, a universal serial bus (USB) interface, an internal or external modem, a video adapter, or a sound card.

The software and the hardware infrastructure of an embodiment of the invention utilize the network node 100 having the graphical display unit 150 and the input unit 140, e.g. a mouse or a trackball. The network node 100 is connected to a wide area network (WAN) 190, for operating in an intranet and for providing access to the Internet to which a number of members of a group of the similar or identical network components 101, 102, etc. are also connected. In order to operate the CPP according to the invention, one of the network components 101, 102, etc. act a host server having an archival data storage for access by the group. In addition to its server tasks, the host server may also provide firewall functions, authenticate the distributed client components connected to the computer network 190, etc.

The CPP according to the present invention can be part of a complex software system embedded in a hardware structure. The cooperation of the software system and the hardware structure is sometimes referred to as IT backbone system. The backbone system can have a layered structure with individual software components acting in accordance with the client/server concept as service providers, service requesters, or both. For example an application software can include software components that provide services for presentation, acting as a server. But at the same time the application software also can act as service requester of data base services provided by a lower layer. The layered components can communicate with each other via predefined (hardware and software) interfaces.

As regards a possible implementation of a layered software structure, a lower layer may include network-related functionalities, a physical data base and an operating system for the network components. A middle layer that interfaces with the lower layer integrates software applications in the upper layer above it. This middle layer may include components like software tools, system administration tools, data handling tools, authorization and security management tools, cross-application modules, and a system kernel. The system kernel can use communications and application program interfaces to access components like application software in the upper layer or the operating system, the data base, and the network in the lower layer. This system kernel can operate independently from the applications and is located "under" the application software and the data layers of the software system. The upper layer contains the different software applications for controlling and monitoring processes relating for example to the management of human resources, sales and distribution, financials, materials, manufacturing, etc.

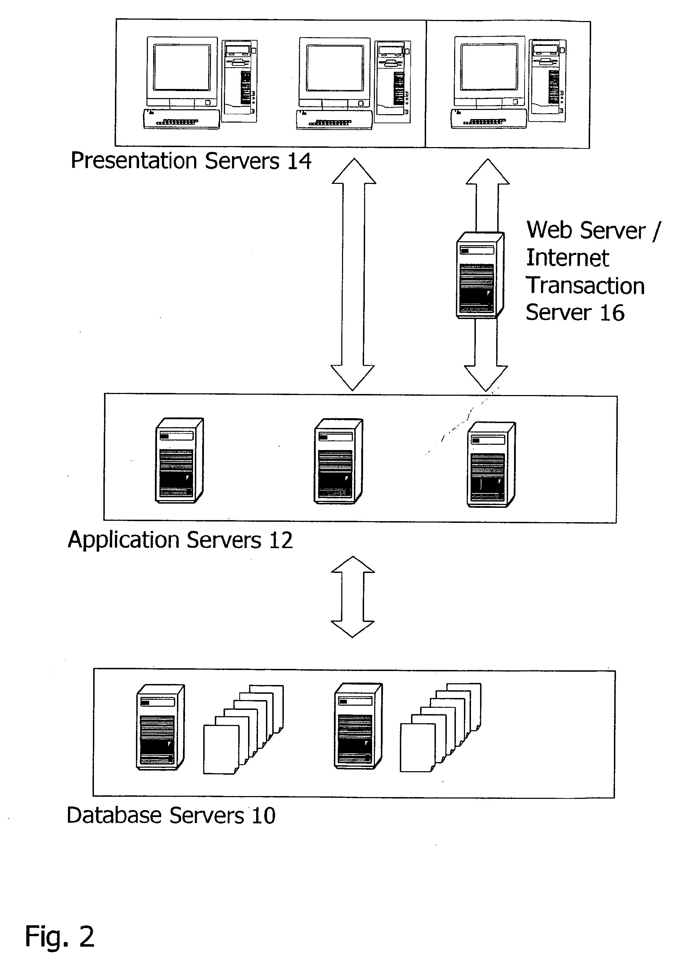

One possible client/server configuration in which the present invention can be carried out is the so-called three-tiered architecture which separates a network system's components into three functional groups: presentation, application, and data base. This is illustrated in Fig. 2 in a hardware-related view.

With the three-tiered architecture shown in Fig. 2, each hardware group can be set up to support demands of its functions. The one or more data base servers 10 contain the data bases. Application servers 12 interfacing the data base servers 10 include the processing logic of the system with services such as spooling, dispatching user requests, and formatting data. The tasks related to the presentation of data are handled by presentation servers 14, which can typically be personal computers or workstations, enabling easy access to the system. External presentation servers 14 may be connected to the application servers 12 via the Internet and a web server/Internet transaction server 16. Communication among the three tiers can be accomplished with the use of standard protocol services mentioned above, such as the ones provided by TCP/IP or CPIC. CPIC stands for Common Programming Interface Communication and includes standard functions and services for program-to-program communication.

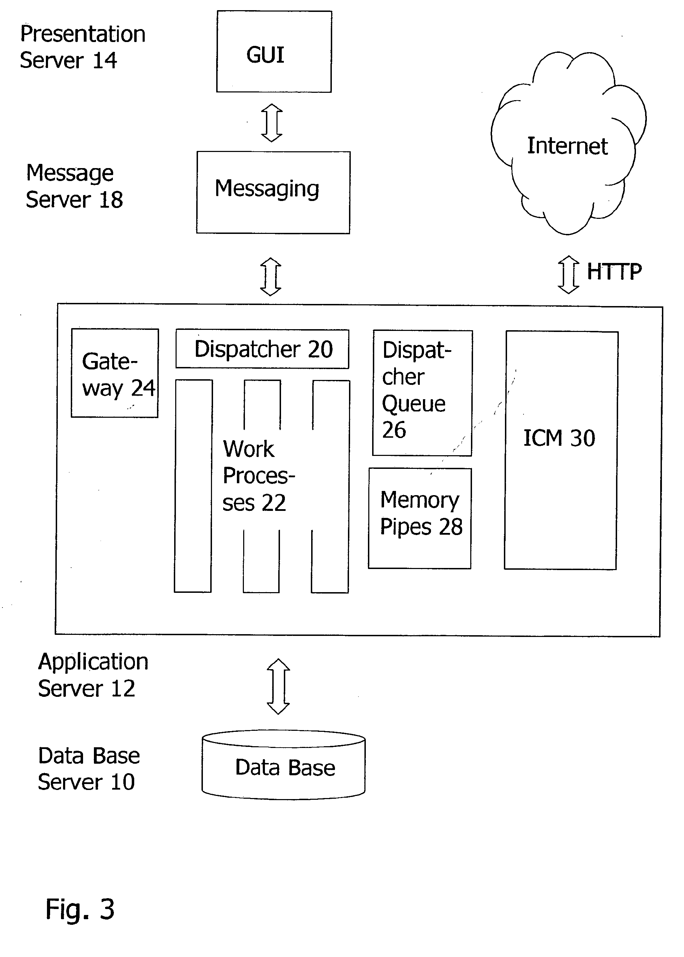

The three-tiered hardware architecture depicted in Fig. 2 is shown in Fig. 3 in a software-related view.

As becomes apparent from Fig. 3, the software components used in context with the present invention include a GUI installed on the presentation server 14 of Fig. 2 and an application that runs on the application server 12. The application has interfaces to the data base installed on data base servers 10, to the Internet and, via the messaging component installed on a message server 18, to the GUI. The message server 18 is a service used by different application servers 12 to exchange data and internal messages. The message server's 18 main tasks include the transfer of messages and the distribution of work load between individual application servers 12.

The application running on the application server 12 includes a dispatcher 18 interfacing the message server 18 and one or more presentation servers 14 on the one hand and a plurality of parallel work processes 22 on the other hand. Each work process 22 has an interface to the data base. Furthermore, a gateway 24 is provided that may either be installed, from a hardware point of view, on the application server 12 or on a dedicated gateway server (not shown). The gateway service provided by the gateway 24 allows for a communication between different applications using the CPIC protocol. The function of the gateway 24 is to exchange large amounts of data between application servers, in contrast to the message server 18 which only exchanges brief internal and control messages. The application component depicted in Fig. 3 further includes dispatcher queues 26, memory pipes 28 and an Internet Communication Manager (ICM) 30, interfacing the Internet.

In the following the co-operation of the individual software components depicted in Fig. 3 is described in more detail.

As data is entered in the presentation server 14, the data is received by the GUI, converted to a standard format, and sent via the messaging component to the dispatcher 20. The connection between the GUI on the presentation server 14 and the dispatcher 20 is made with a protocol like DIAG, according to which small data packages are sent through the network 190 depicted in Fig. 1.

The dispatcher 20 checks whether there are available work processes for processing the request received from the GUI. If no work processes are available, the request is kept together with other requests in the dispatcher queues 26 until a work process becomes available.

Once a work process becomes available, the dispatcher 20 sends the user data to the available work process 22. A work process 22 is a program in charge of executing the application tasks of the present invention. Each work process 22 acts as a specialized system service. From the point of view of an operating system, a group of parallel work processes 22 as depicted in Fig. 3 makes up a runtime system. Each individual work process 22 includes a task handler, a processor, and a data base interface (not shown).

The work processes 22 may execute dialogue steps for the presentation server 14. These steps generally relate to the processing or display of a single GUI screen, which means that right after one work process 22 finishes the execution of a dialogue step for a user session, it is immediately available for use by another user session. For its processing, each dialogue step needs code, dictionary objects, and data. These elements may come from the data base residing on the data base servers 10 or from an internal memory of the application server 12. Within a dialogue step, the task handler is in charge of assigning the corresponding tasks to the internal components (dialogue interpreter and processor), finally sending a SQL request to the data base servers 10. The data base servers 10 send the requested data back to the work process 22, which in turn process it and passes it via the dispatcher 20 to the presentation server 14. The GUI on the presentation server 14 formats the requested data and builds up the screen for the user.

If during a particular work process 22 application data has to be exchanged with other applications such as legacy applications or external applications, the functionality of the gateway 24 is activated.

The ICM 30 allows to directly process HTTP requests (or other protocols) coming from the Internet and/or a browser running on a presentation server 14, and for sending HTTP requests as HTTP client requests to the Internet. The ICM 30, which may be configured as a dedicated kernel process, uses threads to communicate as a server or as a client on the Internet. If an HTTP request is being processed by a work process 22, the memory pipes 28 are used for data transfer. The memory pipes 28 are located in a shared memory portion. In its Web client position a work process 22 creates an HTTP request which is sent to a Web server. It then receives the HTTP response and the work process 22 proceeds on the basis of the HTTP response.

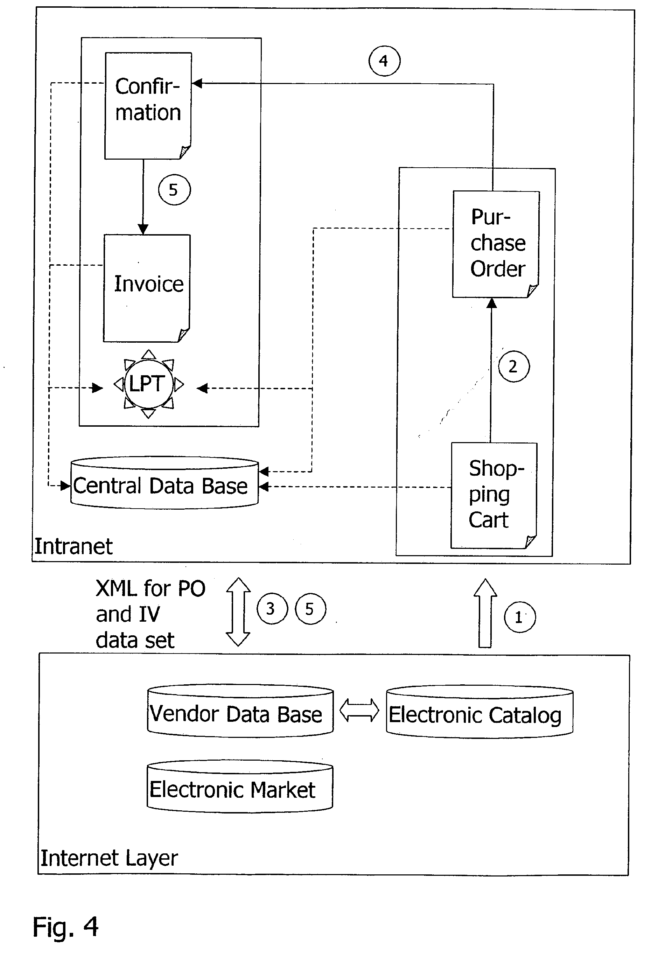

In the following, an exemplary data base related process making use of the above technical concept according to an exemplary embodiment of the invention will be described with reference to Figs. 4 to 10. From a business point of view, the data base related process can be described as the electronic procurement of goods and services. The basic steps constituting the electronic procurement process are depicted in Fig. 4.

The electronic procurement process starts with an electronic requirement request to create a shopping cart data set (or simply "shopping cart''), followed by an approval process if necessary. Then, a follow-on data set in the form of a purchase order data set (or simply "purchase order'') is created, and a status and tracking query formulated if wished for. A consecutive follow-on data set in the form of a goods and services receipt data set (or simply "confirmation") follows. Generation of a follow-on data set in the form of an invoice data set (or simply "invoice"), electronic invoice approval and payment complete the process.

The electronic procurement process outlined above will now be described in more detail with reference to Fig. 4.

As becomes apparent from Fig. 4, the entities involved in the electronic procurement process include a company's intranet, as well as an Internet layer attached to the intranet as has been explained with reference to Fig. 3. The intranet basically includes presentation services, message services, application services, and data base services while the Internet layer includes internet transaction services and web services for hosting various data bases like an electronic catalogue and a vendor data base as well as for providing an electronic market place. The electronic market place focuses on the efficiency of virtual communities and provides a collaborative platform that enables an electronic procurement across multiple software systems and services. The electronic market place basically provides the necessary infrastructure for virtual markets, allowing multiple organizations to electronically communicate with the purpose of conducting collaborative processes. A network component located in the intranet of Fig. 4 can access the electronic market place for example to publicly post a request for quotation (RFQ) for certain materials or services. Once the request is posted, bidding on the request may be performed. Once a bid is accepted, all necessary data sets (like purchase orders, invoices, etc. ) are transferred via the electronic market place thereby forming a closed-loop scenario.

In a first step of the electronic procurement process depicted in Fig. 4, a shopping cart is created by searching the electronic catalogue. The electronic catalogue is regularly updated and allows real-time pricing and availability checking for goods or services to be ordered. Updating of the electronic catalogue is performed via the vendor data base. It should be noted that the electronic catalogue may partially or completely be located in a central data base of the intranet. Instead of or in addition to using the electronic catalogue, requirements may be entered directly on a GUI of a presentation server and transferred to the shopping cart.

A shopping cart may include only a single data item (e.g. product category) a plurality of data items in the case of complex orders. Additionally, each shopping cart includes a header with general data (time stamp, denomination, etc.) and a follow-on data set table. The follow-on data set table contains all follow-on data set records for the shopping cart or references to these records. As a result, the individual processing stages are documented and dependencies are saved.

Once a shopping cart has been created, the requirements comprised therein may be hold or ordered. When holding the requirements, the shopping cart is temporarily stored locally and can be processed again at a later time. When the user wishes to initiate the next processing stage (ordering), including creation of a follow-on data set, the application server checks whether the shopping cart needs to be approved. Generally, a requirement request (shopping cart) must be routed for approval before a purchase order is created. To this end the application server informs a user responsible for releasing the purchase order using a Web-compatible work process. Approval can be carried out using an automated release strategy or, if the requisition is above a predefined threshold allowed for automatic approvals, by initiating a Web-compatible approval work process involving the approver's presentation server.

If a shopping cart is approved or if it is determined that no approval is required, the system automatically creates a follow-on data set in the form of a purchase order (step 2). Both the shopping cart and the purchase order are stored in the central data base of the intranet. On creation of the purchase order, a reference to this follow-on data set is written in the follow-on data set table of the shopping cart. By this, the purchase order is associated with the shopping cart. It should be noted that two or more individual purchase orders may be created for a single shopping cart. This may be the case for example if different data items (goods/services) of the shopping cart are ordered from different vendors.

Once a purchase order has been created, it is sent electronically via the Internet to the vendor's system using for example XML. Other messaging protocols and messaging services like e-mail or EDI may be used also. As an alternative to sending the purchase order to a particular vendor, it may also be placed on the electronic market place as mentioned above (step 3).

After the goods are delivered or the services have been performed, a confirmation work process can be executed using a dedicated GUI (step 4). During the confirmation work process a follow-on data set is created as will be explained below in more detail. The confirmation work process can be initiated via a presentation server located in the intranet or via the vendor's system attached to the intranet via the Internet layer. If the confirmation is entered from the vendor's system, an approval work process is started within the intranet. During the approval work process a presentation server of the intranet displays a GUI that requests confirmation approval.

Once the confirmation has been created, a reference to this follow-on data set is written in the follow-on data set table of the shopping cart. Additionally, the confirmation is stored in the central data base of the Intranet and, if required, printed by printer LPT. It should be noted that for a single purchase order two or more confirmations may be created, for example when the ordered goods are received with different deliveries. In such a case a first confirmation is created for the initial delivery and one or more further confirmations are created for the amount of goods still open after the first delivery.

In a fifth step a further follow-on data set in the form of an invoice is created by the vendor's system and transferred for example by XML to the intranet where it is stored in the central data base. At the same time a reference to this newly created follow-on data set is written in the follow-on data set table of the shopping cart and an approval work process is started. During the approval work process a presentation server of the intranet displays a GUI that requests invoice approval. If required, the invoice may be printed using the printer LPT.

It should be noted that in principle the invoice may also be created within the intranet. On the other hand, the confirmation need not necessarily be created within the intranet but may be created by the vendor's system and transferred to the intranet via the Internet layer.

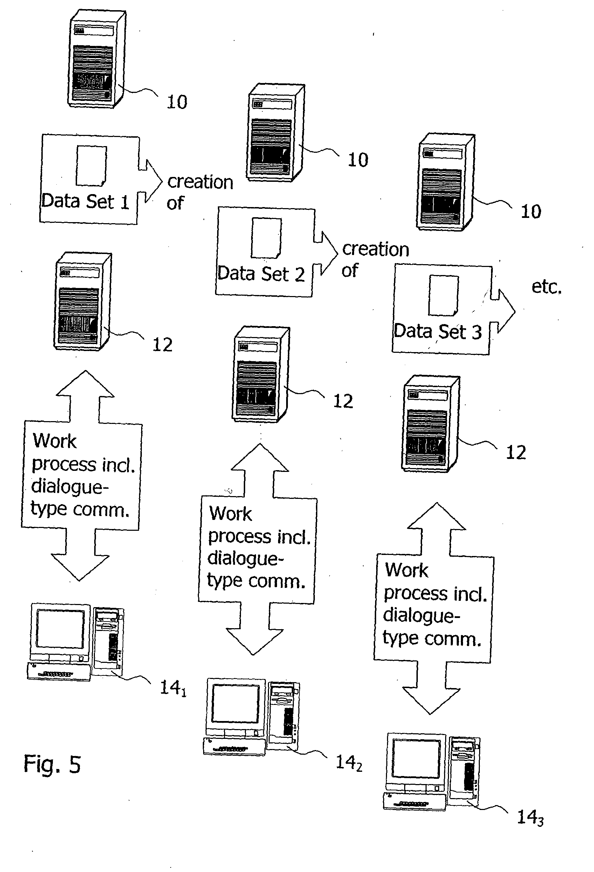

As has become apparent from the above, the electronic procurement process described with reference to Fig. 4 involves the distributed handling of a plurality of data sets including an initial data set (shopping cart) and three independent follow-on data sets (purchase order, confirmation, invoice). Creation of a particular follow-on data set can be performed using a work process that involves one or more dialogue routines as generally depicted in Fig. 5.

As becomes apparent from Fig. 5, the consecutive creation of follow-on data sets generally starts with an initial data set (data set 1) like a shopping cart or a purchase order stored by the data base server 10. Creation of a particular follow-on data set (data set 2) like a confirmation involves a dedicated work process with a plurality of interactive, dialogue-type communications. In the case a follow-on data set in the form of a confirmation is created, this involves the input of data like the amount to be confirmed, the delivery date, etc. These dialogue-type communications usually are performed between application server 12 and a particular presentation server 14₁.

Once the confirmation (data set 2) has been created, a further work process including similar dialogue-type communications is performed to create the next follow-on data set (data set 3) like an invoice. As has been mentioned above with reference to Fig. 4, creation of the invoice may involve the presentation server 14₂ located on the vendor's side.

The consecutive creation of follow-on data sets may continue involving a further work process including further dialogue-type communications and a further presentation server 14₃ as depicted in Fig. 5.

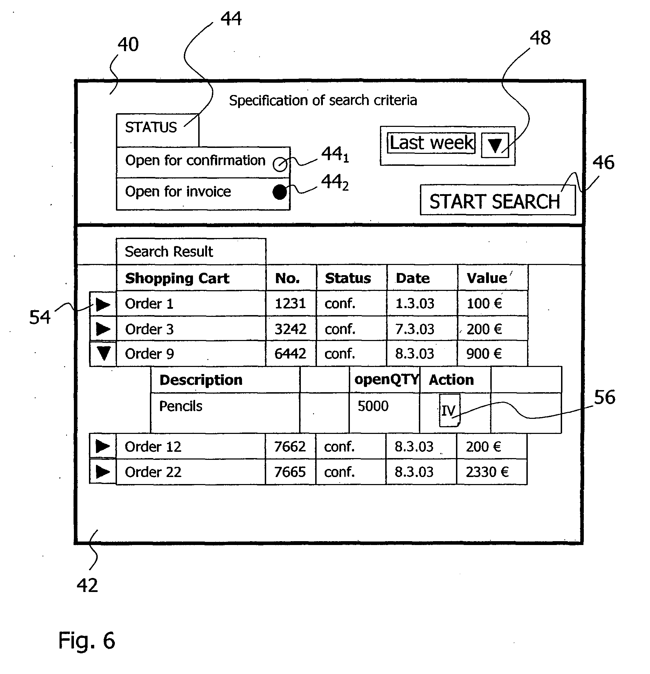

In the following, a first embodiment of the present invention that includes the skipping of one or more of the dialog-type communications illustrated in Fig. 5 will be described with reference to Figs. 6 to 8. According to this embodiment, one or more follow-on documents like confirmations or invoices are created automatically. Moreover, in this embodiment the follow-on documents are not created for individually retrieved data sets but from a user-defined list of data sets that allow for the creation of a follow-on data set. This approach facilitates the mass handling of data sets.

Fig. 6 shows a browser-based GUI of a presentation server that communicates with one or more application servers according to the HTTP protocol. The GUI includes a first portion 40 for specifying user-defined search criteria that are to be considered during generation of a data set list and for initiating the generation of this list. In a second portion 42 of the GUI the generated list is displayed at least partially, namely in the form of selected information derived from the individual data set headers.

The GUI of Fig. 6 is part of a functionality for checking a shopping cart status. Using this functionality, users can check the status of individual data items in their shopping carts according to user-defined criteria. Thus, information about each particular data item of a shopping cart can be tracked as an order associated with the data item transits the individual stages of the electronic procurement process. Provided the system has not yet created any follow-on data set for a shopping cart, the system allows changes to the individual data items. As soon as a single follow-on data set has been created, the shopping cart and the individual data items comprised therein are locked.

As becomes apparent from Fig. 6, the search portion 40 of the GUI includes a status selector 44. The status selector 44 enables a selection of a particular follow-on data set type that is to be automatically created, namely either a confirmation ("open for confirmation" or an invoice ("open for invoice"). The status selector 44 thus allows to either select the follow-on data set type "confirmation" or the follow-on data set type "invoice". With each follow-on data set type displayed in the search portion 40 an individual control element 44₁, 44₂ is associated. Each of the individual control elements 44₁, 44₂ is configured to be activated by a user-operated pointing device like a mouse to generate a control signal indicative of the selected type.

In Fig. 6, the control element 44₂ associated with the follow-on data set type "invoice" has been activated. This means that upon activation of the control element 46 titled "START SEARCHING", a list of shopping carts that are open for invoice and that allow for an automatic creation of a follow-on data set of the type "invoice", is generated.

Additionally, the search window 40 includes a further control element 48 that allows for a specification of a second search criteria. This second search criteria relates to the creation date of the shopping carts that are to be included in the list. In the view depicted in Fig. 6, all shopping carts that are open for invoice and that have been generated within the last week will be listed. Although not shown in Fig. 6, further search criteria like the name of a shopping cart or a description of a particular data item may be specified.

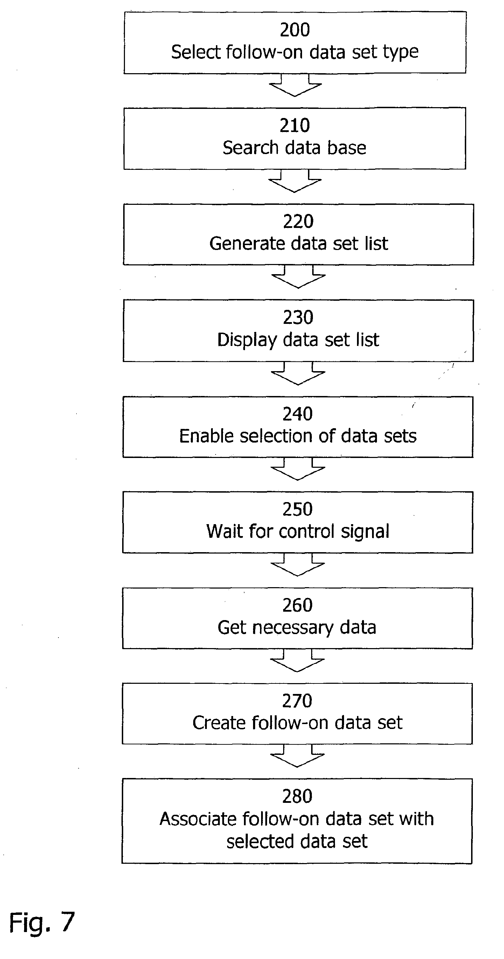

Referring now additionally to the flow chart of Fig. 7, the steps involved when performing the method according the first embodiment of the present invention will be described in more detail.

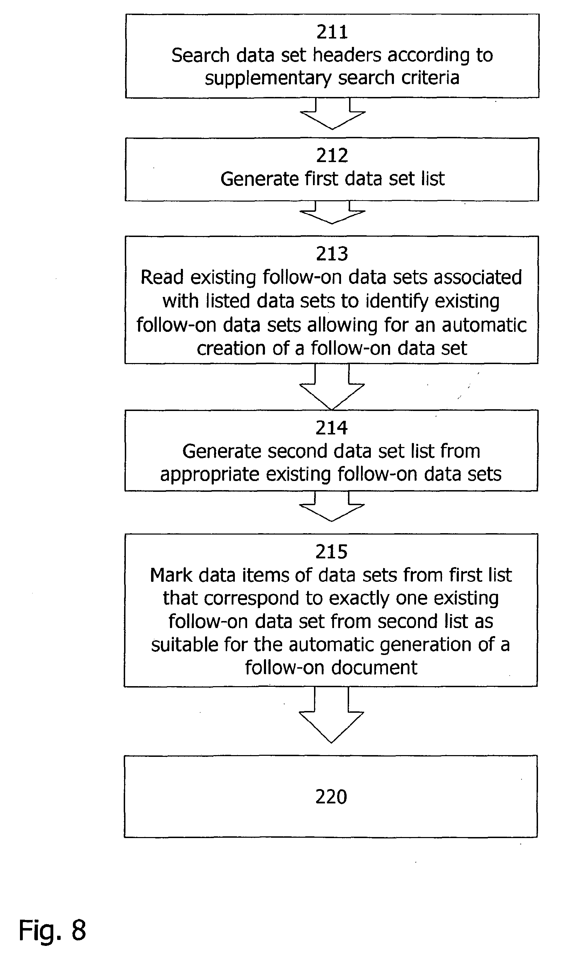

The method starts with selecting a particular follow-on data set type as described above with reference to the status selector 44 of the GUI's search portion 40 and by the optional specification of further search criteria (step 200). Once the control elemerit 46 titled "START SEARCH" is activated by the user using a keyboard or a mouse, a HTTP control signal is generated and sent from the presentation server to the application server. This control signal includes the search criteria and requests the application server to initiate a search in the one or more data bases stored on data base server (step 210). In the scenario depicted in Fig. 6, the search relates to all shopping carts that have been created during the last week and that include one or more data items allowing for the automatic creation of an invoice. The data base server delivers information about the matching shopping carts back to the application server for generating the shopping cart list (step 220) as will be described later with reference to Fig. 8.

Once the data set list has been generated, it is transferred from the application server to the presentation server for being displayed in the display portion 42 of the GUI (step 230). As can be gathered from Fig. 6, the displayed shopping cart list includes for each shopping cart matching the search criteria the shopping cart name, a characteristic number assigned to the shopping cart, the shopping cart status (here: "confirmed"), the creation date of the shopping cart and the total value associated with the shopping cart. This information basically corresponds to the information included in the shopping cart header.

Additionally, an individual control element 54 is related with each shopping cart. The control element 54 is configured to be activated by a user-operated input device like a mouse to generate a dedicated control signal. Activation of an individual control element 54 enables an expansion of (i.e. the display of additional information about) a particular shopping cart for which the previously specified follow-on data set, i.e. an invoice, is to be automatically created.

Upon activation of a control element 54 associated with a particular shopping cart, a control signal is generated that requests the expansion of the shopping cart or, more particularly, the display of the one or more individual data items of the shopping cart that allow for the automatic creation of an invoice. Simultaneously, a further control element 56 associated with the data item that allows for the automatic creation of an invoice is displayed.

In the view depicted in Fig. 6, the shopping cart titled "Order 9" has been expanded by activating the control element 54 associated with this shopping cart. The expanded shopping cart titled "Order 9" includes a single data item "pencils" that is ready for automatic invoicing. Together with the description of the data item the open quantity to be invoiced (i.e. the confirmed but not yet invoiced quantity) and the control element 56 for initiating the automatic creation of an invoice for the data item "pencils" and the specified open quantity are displayed. Due to performance reasons, the GUI allows to expand only one shopping cart of the list at a time.

As soon as a shopping cart is expanded and the data item that allows for the automatic creation of an invoice as well as the associated control element 56 are displayed, a selection of this data item (and thus of the corresponding shopping cart) for automatic creation of an invoice is enabled (step 240). The GUI now waits for generation of a control signal by activating the control element 56 (step 250). As soon as a user activates the control element 56, a control signal is generated that initiates a work process associated with the automatic creation of an invoice for the selected data item. This work process skips the dialogue-type communications illustrated in Fig. 5 and creates the invoice for the selected data item "pencils" in a background process.

Background processing is advantageous because the processing time of the background process is considerably shorter than the processing time of an interactive process as the ones depicted in Fig. 5. Not only are access delays reduced and transitions between consecutive processing stages facilitated, but also processing resources within the application server are released and time out errors often associated with the time-consuming interactive generation of follow-on data sets are avoided.

The background work process associated with the automatic creation of a follow-on data set in context with the present invention includes a plurality of steps which are performed chronologically when the control element 56 in the display portion 42 is activated. These steps include an authorization control step, a refreshing of pertinent data set tables, an evaluation of the data set history to derive the necessary data required for generation of the particular follow-on data set (step 260), a locking of one or more existing data sets associated with the selected data set for which a follow-on data set is to be created, the preparation of an approval work process, the creation of the requested follow-on data set (i.e. of the invoice; step 270) and storing of the newly created follow-on data set.

In a last step 280 the newly created follow-on data set (invoice) is associated with the selected data item. This is done by writing a reference to the newly created follow-on data set in the follow-on data set table of the initial data set, i.e. the shopping cart.

During step 260, i.e. in context of Fig. 6 during generation of the data required for creating the invoice for the data item "pencils", or earlier (e.g. prior to step 230) an assignment routine is performed which derives the not yet invoiced but already confirmed quantity. In the case of partial invoices that have been created earlier using e.g. manual dialogue-type communications as depicted in Fig. 5, these partial quantities are also taken into account when calculating the open quantity that is to be automatically invoiced. When deriving the data necessary for automatically creating the invoice, the initially ordered quantity specified in the shopping cart is compared with the quantity that has already been invoiced and the remainder is automatically invoiced. In order to determine the quantity that has already been invoiced one or more invoices that have already been created for the particular data item "pencils" in Fig. 6 are taken into account and the accumulated already invoiced quantity is determined.

In principle, the data necessary for automatically creating the invoice (or any other follow-on data set like a confirmation) may be derived during various processing steps. The data may for example already be derived when searching the data base and creating the data set list according to the user-defined criteria, i.e. during one or both of steps 210 and 220 in Fig. 7. This has the advantage that the data on which the automatic creation of the requested follow-on data set is based can be displayed simultaneously with the control element 56 for initiating the automatic creation of the requested follow-on data set.

This means in the context of Fig. 6 that the open quantity is already calculated prior to displaying the data set list (step 230) so that the open quantity may be displayed together with the control element 56. Hence, the user is informed for which quantity an invoice will be generated upon activation of the control element 56. However, some or all of the data required for automatically generating the invoice or any other follow-on-data set may additionally or alternatively be derived only after the control element 56 has been activated, e.g. during the background work process described above.

In the following, the process of searching the data base (step 210 in Fig. 7) for matching shopping carts will be explained in more detail with reference to the flow chart of Fig. 8.

In a first sub step 211, the shopping cart headers in the data base are searched according to the supplementary search criteria only, i.e. the temporal criteria selected by control element 48 in the search portion 40 of the GUI depicted in Fig. 6. In sub step 211 the type of follow-on data set (i.e. invoice) selected using the control element 44 is thus disregarded.

In sub step 212 a first list is generated from all shopping carts that were created within the last week as specified by control element 48 in Fig. 6 regardless of the fact whether or note they allow for the automatic creation of an invoice.

In a next sub step 213 all previously created confirmations associated with the shopping carts of the first list are determined by reading the appropriate confirmation data sets. For each data set of the first list one or more confirmations, if existing, are evaluated to find out whether or not the automatic creation of an invoice is possible for the particular data set of the first list. In this context it is determined inter alia if there is a quantity > 0 open for invoicing, i.e. already confirmed but not yet invoiced. Otherwise not automatic invoicing could be performed. Simultaneously, the amount open for invoicing is calculated for being displayed later on in the data field "open QTY" of the GUI's display portion 42. As has been mentioned above, the evaluation is performed on a data item basis.

All confirmation data sets that are associated with a shopping cart for which it has been determined that an invoice can automatically be created are accumulated in a second list in sub step 214.

In the following sub step 215 the second list is evaluated and all shopping carts from the first list that include at least one data item allowing for the automatic creation of an invoice are marked accordingly. The marked data set list is then used as the basis for generating the GUI as depicted in Fig. 6 (display portion 42). Only for the marked data items of the shopping carts a control element 56 will be shown upon expansion of the corresponding shopping cart.

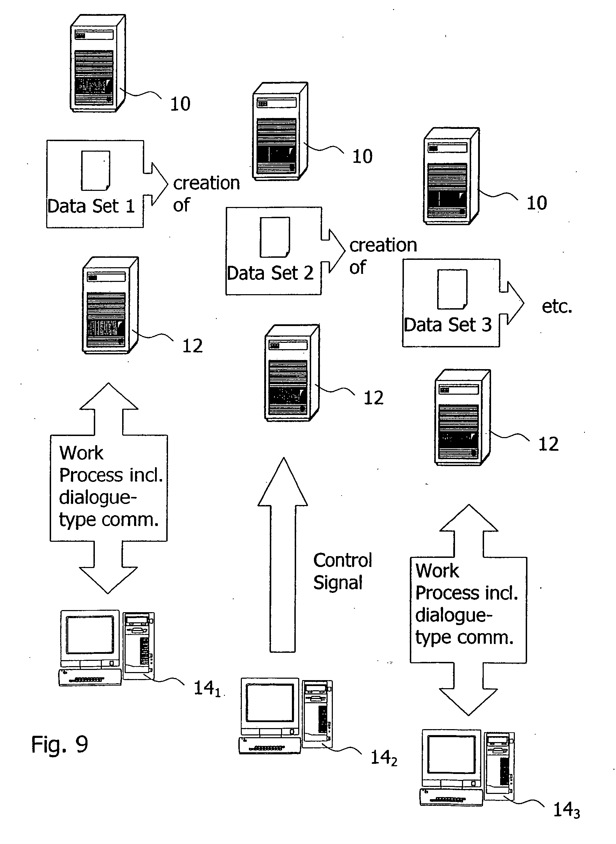

The basic differences between an electronic procurement process involving only work processes with dialogue-type communications as depicted in Fig. 5 and an electronic procurement process making use of the automatic creation of follow-on data sets as described above with reference to Figs. 6 to 8 become apparent from the schematic diagram shown in Fig. 9.

The schematic diagram of Fig. 9 basically corresponds to the diagram shown in Fig. 5. From Fig. 9 it becomes clear, however, that one work process including dialogue-type communications, namely the creation of an invoice (data set 3), has been skipped due to the generation of the control signal as a result of activating the control element 56 depicted in Fig. 6. Thus, the dialogue-type communications performed by presentation server 14₂ in Fig. 5 has been substituted with a background work process involving only the application server 12 and the data base server 10 as shown in Fig. 9.

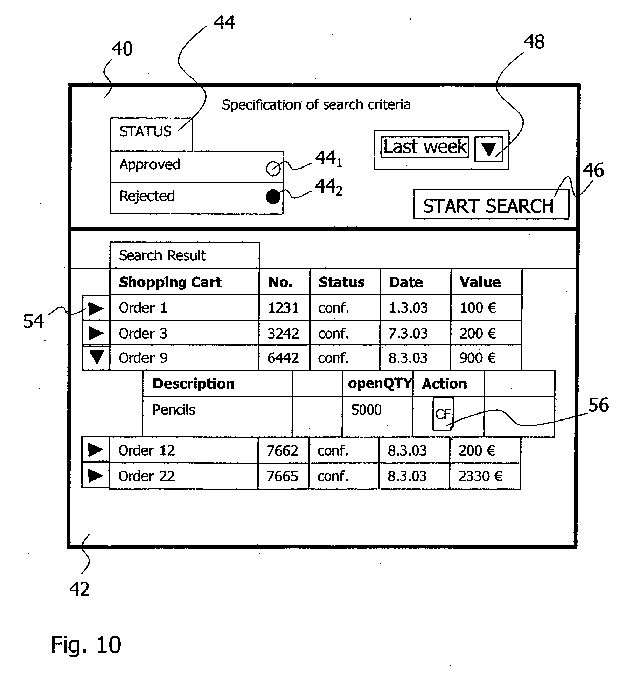

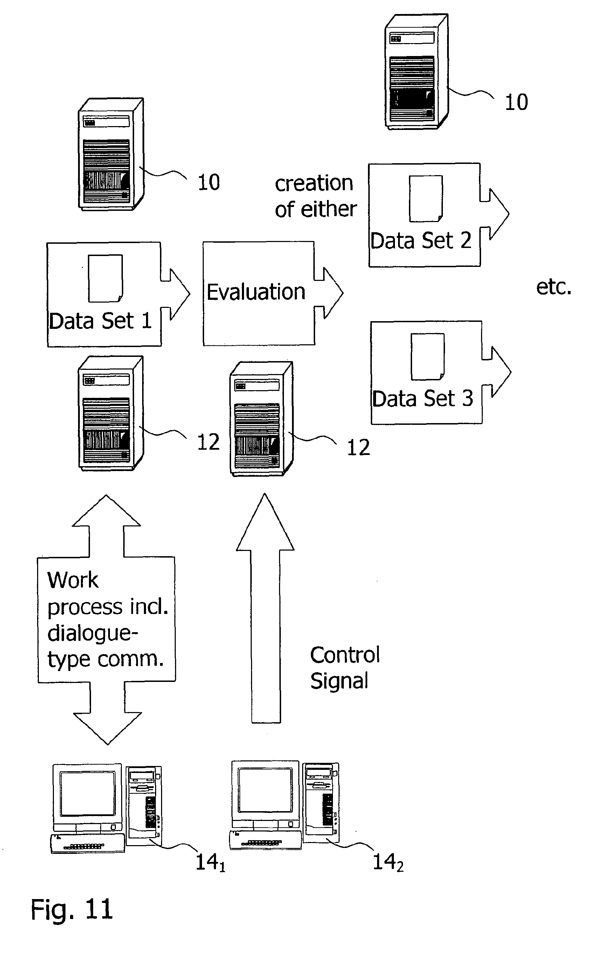

In the following a second embodiment of the invention will be described with reference to Figs. 10 and 11. In Fig. 10 a GUI similar to the GUI depicted in Fig. 6 is shown. Corresponding elements are denoted with corresponding reference signs and a more detailed description thereof is omitted. Instead, only the differing aspects will be explained.

As becomes apparent from Fig. 10, the display portion 40 of the GUI has a status selector 44 which does not enable a selection of a particular follow-on data set type (e.g. confirmation/invoice) but only a selection between the two shopping cart selection criteria "approved" and "rejected". Consequently, the search routine will generate a list of shopping carts that also include shopping carts for which no follow-on data set can be created automatically. Upon expansion of such a shopping cart in the display portion 42 of the GUI no associated control element Will be displayed in the action fields of the individual data items. This indicates that automatic creation of any follow-on data set is disabled.

Once initiated as explained for the first embodiment, the search routine evaluates the individual shopping carts matching the search criteria not only with respect to the question whether or not a follow-on data set can automatically be created for any data item of this particular shopping cart but additionally with respect to the particular type of follow-on data set that can be created. This type information is additionally included in the data stream from the application server to the presentation server and enables the presentation server's GUI to display an appropriate type of control element as will now be explained in more detail.

For each follow-on data set type (i.e. confirmation/invoice) an individual control element type is defined. This becomes apparent from Fig. 10. For the data item "pencils" of shopping cart "Order 9" a confirmation can automatically be created. This is indicated by the caption "CF" of control element 56 ("CF type"). If the data item "pencils" allowed for the automatic creation of an invoice, the control element 56 would be captioned "IV" ("IV type") as shown in Fig. 6.

Together with the description of the data item the open quantity to be invoiced (i.e. the confirmed but not yet invoiced quantity) and, if the data item allows for the automatic creation of a follow-on data set, the appropriate type of control element 56 for initiating the automatic creation of the particular follow-on data set (here: an invoice for the data item "pencils") are displayed as shown in Fig. 10.

The basic concept underlying the second embodiment of the invention is schematically illustrated in the diagram of Fig. 11. As becomes apparent from Fig. 11, the shopping carts of the shopping cart list are individually subjected to an evaluation step during which it is determined if a particular shopping cart includes a data item that allows for an automatic creation of a follow-on data set. If this is the case, the type of follow-on data set that can be created for an individual data item is determined and corresponding type information is included in the shopping cart list.

Upon expansion of a particular shopping cart that includes a data item allowing for a creation of a particular follow-on data set, the type information is assessed and an appropriately captioned control element 56 as shown in Fig. 10 is displayed. Upon activation of the control element 56 shown in Fig. 10, a control signal is generated that initiates the automatic creation of the appropriate follow-on data set for the selective data item, i.e. either a confirmation or an invoice.

Although embodiments of the present invention have been illustrated in the accompanying drawings and described in the foregoing description, it will be understood that the invention is not limited to the embodiments disclosed. The invention is capable of numerous rearrangements, modifications and substitutions without departing form the spirit of the invention as set forth and defined by the following claims.

## Claims

1. A method for handling data sets in a computer network by automatically creating for a data set at least one associated follow-on data set, wherein the data sets are accessible from a plurality of network components and wherein a dialogue routine is implemented for initiating one or more dialogue-type communications that include at least one of inputting and confirming data required for creating the follow-on data set, comprising
- providing a data base with a plurality of data sets;
- generating a list of data sets according to one or more user-defined criteria;
- displaying the list at least partially, wherein for a data set of the list that allows for the automatic creation of a follow-on data set a related first control element is displayed, the first control element being configured to be activated by a user-operated input device to generate a first control signal for initiating the automatic creation of a follow-on data set for the data set selected by activating the related first control element; and,
- upon generation of the first control signal, skipping the dialogue routine for the follow-on data set to be created, automatically creating the follow-on data set on the basis of data automatically derived from at least one of the selected data set and any data set associated with the selected data set, and associating the newly created follow-on data set with the selected data set.

2. The method of claim 1, further comprising
defining a plurality of follow-on data set types.

3. The method of claim 2, further comprising
consecutively creating two or more follow-on data sets during a process involving consecutive processing stages, wherein each processing stage is associated with a particular follow-on data set type.

4. The method of one of claims 1 to 3, further comprising
enabling the input of one or more selection criteria that are to be considered when generating the list of data sets.

5. The method of 4, further comprising
enabling a selection of a follow-on data set type and generating the data set list from data sets that allow for a creation of a follow-on data set of the selected type.

6. The method of claim 5, wherein
the step of enabling a selection of a follow-on data set type includes
- displaying a list of two or more follow-on data set types and relating a second control element with each type, the second control element being configured to be activated by a user-operated input device to generate a second control signal indicative of the selected type; and
- evaluating the second control signal prior to generating the list of data sets.

7. The method of one of claims 2 to 6, further comprising
- defining for each follow-on data set type an individual type of a first control element;
- assessing the data sets of the list to determine the type of follow-on data set that can automatically be created for a particular data set; and
- displaying a data set for which a follow-on data set of a specific type can be created together with the corresponding type of first control element.

8. The method of one of claims 1 to 7, wherein
the list also includes data sets for which an associated follow-on data set can only be created using the dialogue routine and wherein for such data sets no first control element is displayed or wherein the first control elements for these data sets are configured as non-active.

9. The method of one of claims 1 to 8, wherein
the data sets stored in the data base include one or more individual data items and wherein follow-on data sets are created separately for the individual data items.

10. The method of claim 9, wherein
the list is generated from data sets that include at least one data item that allows for a creation of a follow-on data set.

11. The method of claim 10, wherein
an individual first control element is provided for each individual data item of a data set that allows for a creation of a follow-on data set.

12. The method of one of claims 1 to 11, further comprising
relating a third control element with each displayed data set of the list of data sets, the third control element being configured to be activated by a user-operated input device to generate a third control signal, wherein, upon generation of the third control signal, additional information about the selected data set is displayed together with the first control element.

13. The method of one of claims 1 to 12, wherein,
upon creation of the first control signal, at least one of the selected data set and any data set associated therewith is locked at least partially with respect to changing data comprised therein.

14. The method of one of claims 1 to 13, wherein
the data required for automatically generating the follow-on data set is derived from at least one of the selected data set and any data set associated with the selected data set prior to displaying the list of data sets.

15. The method of one of claims 1 to 14, wherein
the step of automatically deriving the data required for creating the follow-on data set includes comparing an initially specified numerical value with an accumulated numerical value that has been generated from individual numerical values input or confirmed in context with the creation of at least one of the selected data set and any associated data set.

16. The method of one of claims 1 to 15, wherein
the step of associating the newly created follow-on data set with the selected data set includes writing information relating to the newly created data set in a memory location of the selected data set or any data set associated with selected data set, or vice versa.

17. The method of one of claims 1 to 16, further comprising
controlling a printing device arranged in the network to generate a document from the information included in the newly created follow-on data set.

18. The method of one of claims 1 to 17, wherein
the computer network includes an application server and one or more presentation servers communicating with the application server according to the hypertext transfer protocol (HTTP).

19. A computer program product comprising program code portions for being executed on one or more components of a computer network, the program code portions controlling one or more components of the computer network to automatically create for a data set at least one associated follow-on data set, wherein the data sets are stored in a data base and are accessible from a plurality of network components, and wherein a dialogue routine is implemented for initiating one or more dialogue-type communications that include at least one of inputting and confirming data required for creating the follow-on data set, the computer program product including
- a first program code portion for searching the data base for data sets according to one or more user-defined criteria and for generating a data set list thereof;
- a second program code portion for displaying the data set list at least partially, wherein for a data set of the list that allows for the automatic creation of a follow-on data set a related control element is displayed, the control element being configured to be activated by a user-operated input device to generate a control signal for initiating the automatic creation of a follow-on data set for the data set selected by activating the related control element; and
- a third program code portion responsive to generation of the control signal, for skipping the dialogue routine for the follow-on data set to be created, for automatically creating the follow-on data set on the basis of data derived from at least one of the selected data set and any data set associated with the selected data set, and for associating the newly created follow-on data set with the selected data set.

20. A network component (12; 100) of a computer network that includes a data base (10) with a plurality of data sets and a plurality of network components (12; 100, 101, 102) accessing the data base (10), the computer network being configured for automatically creating for a data set at least one associated follow-on data set, wherein a dialogue routine is implemented for initiating one or more dialogue-type communications that include at least one of inputting and confirming data required for creation of the follow-on data set, the network component (12; 100) comprising
- a first interface for accessing the data base (10);
- a processor (110) for generating an instruction for searching the data base (10) for data sets according to one or more user-defined criteria and for generating a list thereof;
- a second interface to a presentation unit (14) that displays the list at least partially, wherein for a data set of the list that allows for the automatic creation of a follow-on data set a related control element (56) is displayed, the control element (56) being configured to be activated by a user-operated input device (140) to generate a control signal for initiating the automatic creation of a follow-on data set for the data set selected by activating the related control element (56);
- the processor (110), upon receipt of the control signal via the second interface, skipping the dialogue routine for the follow-on data set to be created, automatically creating the follow-on data set on the basis of data automatically derived from at least one of the selected data set and any data set associated with the selected data set, and associating the selected data set with the newly created follow-on data set.
